# EUROPÄISCHE PATENTANMELDUNG

(11) **EP 1 188 549 A2**
(43) Veröffentlichungstag der Anmeldung: **20.03.2002**
(21) Anmeldenummer: 01119096.4
(22) Anmeldetag: 08.08.2001
(51) Int. Cl.: B32B 17/10, C03C 27/12

(54) **Verbundglassscheibe**

(30) Priorität: 19.09.2000 DE 10046225
(71) Anmelder: Dr.Ing. h.c.F. Porsche Aktiengesellschaft, 70435 Stuttgart (DE); BBG Braunsberger GmbH & Co. KG, 87719 Mindelheim (DE)
(72) Erfinder: Neumann, Ralph, 74245 Löwenstein (DE); Brandner, Hans, 85221 Dachau (DE)

(57) **Zusammenfassung**

Bei einer Verbundglasscheibe wird eine zwischenliegende Folie randseitig der Glasscheiben derart abgeschnitten, daß sich eine hohlraumfreie Konturfläche ergibt, die mit einem Kunststoffrahmen dicht umschließend verbunden wird. Die Stirnflächen der Glasscheiben können sowohl bündig als auch abgerundet oder abgestuft ausgebildet sein. In jedem Fall wird sich durch einen Beschnitt der Folie eine hohlraumfreie Konturfläche ergeben, die beim Umspritzen, Umschäumen, Umgießen oder Umrahmen mit einem Kunststoffrahmen keine Blasenbildung verursacht.

## Beschreibung

Die Erfindung bezieht sich auf eine Verbundglasscheibe für ein Kraftfahrzeug sowie auf ein Verfahren nach dem Oberbegriff der Ansprüche 1 und 4.

Bei der Umrahmung einer Verbundglasscheibe mit einem Kunststoffmaterial können sich durch randseitig eingeschlossene Hohlräume an der Glasscheibe Luftblasen bilden. Dies hat in nachteiliger Weise zur Folge, daß eine Beeinträchtigung der Sicht durch diese Luftblasen, sowie durch entstehende randseitige Verfärbungen eintreten können. Desweiteren besteht nach einer gewissen Zeit auch die Gefahr einer Ablösung des Kunststoffrahmens von der Verbundglasscheibe.

Aufgabe der Erfindung ist es, eine Verbundglasscheibe für ein Kraftfahrzeug zu schaffen, mit der diese bekannten Nachteile vermieden werden.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß durch die Vermeidung von randseitigen Hohlräumen zwischen den verbundenen Scheiben eine Blasenbildung beim Umgießen der Verbundglasscheibe zur Herstellung eines Rahmens unterbunden wird. Hierzu bildet die Folie zwischen den Glasscheiben mit den Stirnflächen der Glasränder zumindest eine hohlraumfreie äußere Konturfläche, an die sich der Kunststoffrahmen unmittelbar und dicht anschließt.

Wenn die Stirnflächen der Glasscheiben randseitig abgerundet sind und die Folie sich über die inneren Abrundungen der Stirnflächen der Glasscheiben erstreckt, erfolgt bei dieser Ausführung ebenfalls ein Folienbeschnitt derart, daß sich eine durchgehende ebene Konturfläche zwischen den Stirnflächen der Glasscheiben ergibt und der Kunststoffrahmen sich unmittelbar und dicht an diese Konturfläche anschließt. Auch in diesem Fall ergeben sich keine Hohlräume, die eine Luftblasenbildung zulassen.

Nach einer weiteren Ausführung der Erfindung können die Stirnflächen der beiden Glasscheiben auch abgestuft zueinander angeordnet sein und die Folie zwischen den inneren Kanten der Stirnflächen weisen nach einem Folienbeschnitt eine plane Fläche auf, die mit den anschließenden Stirnflächen der Glasscheibe eine durchgehende Konturfläche bilden, an die sich der Kunststoffrahmen dicht anschließt. Auch in diesem Fall wird kein Hohlraum zwischen den Glasscheiben gebildet, so daß eine Luftblasenbildung wirksam unterbunden wird.

In jedem Fall soll sich zwischen den beiden Scheiben mit zwischenliegender Folie kein Hohlraum bilden können, in dem sich beim Umgießen, Umspritzen, Umrahmen oder Umschäumen mit Kunststoff zur Bildung des Rahmens in nachteiliger Weise Luftblasen bilden.

Durch den bündigen bzw. hohlraumfreien Verbundfolienbeschnitt an der Scheibenaußenkante unabhängig vom Glaskantenbeschnitt und unabhängig vom Material des Kunststoffrahmens und der konstruktiven Ausführung wird eine Luftblasenbildung in vorteilhafter Weise nach der Erfindung vermieden.

Es kann sich bei der Verbundglasscheibe um zwei oder mehrere verbundene Glasscheiben handeln. Die Glasscheibe kann aus Normalglas, ESG-Glas oder einem gehärteten Glas, bzw. einem Teil vorgepreßten Glas o.ä. Glas bestehen. Das Glas kann auch aus Isolierglas wie auch aus Verbundglasscheiben in einer Kunststoffkonstruktion bestehen. Bei allen diesen Scheiben wird eine solche Konturfläche durch Folienbeschnitt gebildet, die hohlraumfrei ist.

Zur Durchführung des Beschnittes der Folie zwischen den beiden Glasscheiben wird die zwischen den Glasscheiben herausragende Folie bündig zu den Kanten und/oder Stirnflächen der Ränder der Glasscheibe abgeschnitten und nachfolgend wird das gebildete Glassegment aus den Scheiben der beschnittenen Folie bestehend in ein Werkzeug eingelegt und in einem nachfolgenden Arbeitsvorgang wird ein Kunststoffmaterial zur Bildung eines das Segment vollständig umgebenden Kunststoffrahmens eingebracht. Dieser Kunststoffrahmen umschließt die Stirnflächen der Scheibe unmittelbar und dicht anliegend.

Ein Ausführungsbeispiel der Erfindung ist in den Zeichnungen dargestellt und wird im folgenden näher beschrieben.
Es zeigen:
- Fig. 1: eine Ansicht auf eine Verbundglasscheibe in einem Werkzeug zur Herstellung eines Kunststoffrahmens,
- Fig. 2: eine vergrößerte Darstellung der Einzelheit X gem. Fig. 1,
- Fig. 3: einen Schnitt durch eine Verbundglasscheibe mit geradflächigen, bündigen Kantenflächen und zwischenliegender Folie,
- Fig. 4: einen Schnitt durch eine Verbundglasscheibe mit abgerundeten Kanten und zwischenliegender Folie und
- Fig. 5: einen Schnitt durch eine Verbundglasscheibe mit zueinander randseitig abgestuften Glasrändern mit zwischenliegender Folie.

Eine Verbundglasscheibe 1 besteht wenigstens aus zwei durch eine Folie 2 verbundene Glasscheiben 3, 4; 3a, 4a; 3b, 4b die von einem Kunststoffrand 5 umgeben sind, in dem ein Kunststoffprofil 6 angeordnet sein kann.

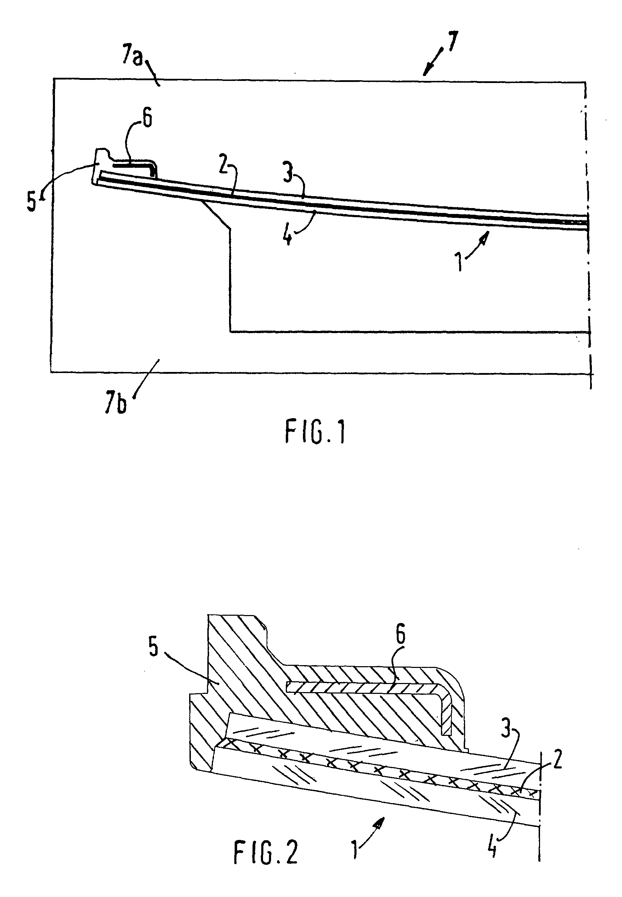

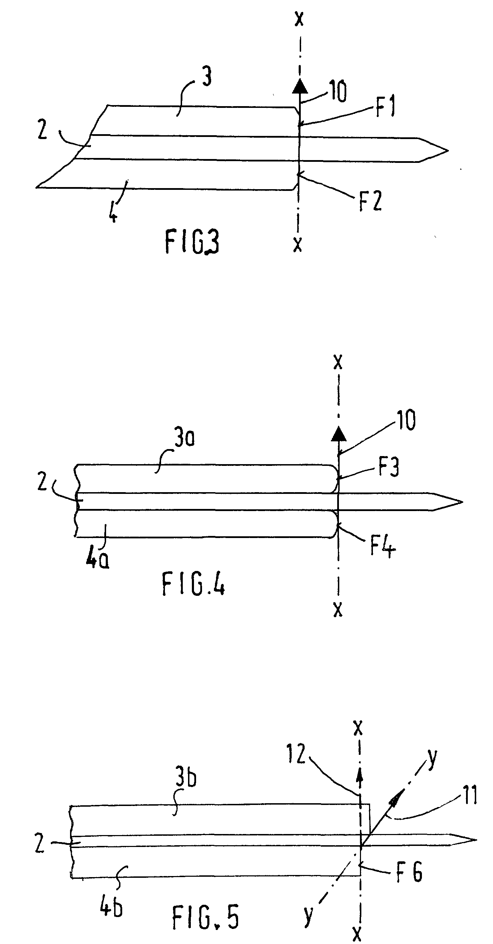

In Fig. 1 ist ein Werkzeug 7 mit einem Unter- und Oberteil 7a, 7b gezeigt, in dem der Rand 5 für die Verbundglasscheibe 1 hergestellt wird.

In den Fig. 3 bis 5 sind unterschiedliche Glasränder der Scheiben 3, 4; 3a, 4a; 3b, 4b dargestellt. In Fig. 3 sind die Flächen F1 und F2 der Glasränder in einer Ebene X-X angeordnet. Der Beschnitt der Folie 2 erfolgt in Pfeilrichtung 10 entlang der Ebene X-X. Hierdurch wird eine nahezu mit den Flächen F1 und F2 bündige Konturfläche der Folie 2 mit den Stirnflächen F1 und F2 der Scheiben 3, 4 erzielt.

In Fig. 4 sind die Glasränder der Scheiben 3a, 4a abgerundet. Der Beschnitt der Folie 2 erfolgt in Pfeilrichtung 10, in der Ebene X-X. Hierdurch wird eine nahezu mit den Flächen 3 und 4 bündige Konturfläche der Folie 2 erzielt.

In Fig. 5 sind die Stirnflächen F5 und F6 der Glasränder der Scheiben 3b und 4b abgestuft zueinander angeordnet. In diesem Fall erfolgt der Beschnitt in Pfeilrichtung 11 in der Ebene Y-Y oder in Pfeilrichtung 12 in der Ebene X-X, so daß sich eine hohlraumfreie Konturfläche ergibt.

Das Verfahren zur Durchführung des Beschnittes der zwischen den Scheiben 3, 4; 3a, 4a; 3b, 4b liegenden Folie 2 wird in folgenden Schritten durchgeführt.

Die Folie 2 wird bei der Herstellung der Verbundglasscheibe 1 mit Überlänge zwischen den beiden Glasscheiben 3, 4; 3a, 4a; 3b, 4b eingelegt und die Scheiben werden nachfolgend miteinander verbunden. Danach erfolgt mittels eines Werkzeugs ein Beschnitt der Folie 2 derart, daß sich eine bündige entweder durchgehende oder gestufte Fläche der Folie zu den Stirnflächen F1, F2; F3, F4; F5, F6 der Glasränder ergibt und eine hohlraumfreie Konturfläche erzielt wird. Danach wird die Verbundglasscheibe 1 in das Werkzeug 7 zwischen einem Werkzeugunterteil 7a und einem Werkzeugoberteil 7b eingelegt, in dem dann ein Kunststoffrahmen 5 durch Umschäumen hergestellt wird.

Durch den erfindungsgemäßen Beschnitt der Folie in den Ebenen X-X und/oder Y-Y wird eine Konturfläche zwischen der Folie 2 und den Stirnflächen F1, F2; F3, F4; F5, F6 der Glasränder erzielt, wodurch eine Luftblasenbildung ausgeschlossen wird.

## Patentansprüche

1. Verbundglasscheibe für ein Kraftfahrzeug, bestehend aus mindestens zwei Glasscheiben, die über eine Folie miteinander verbunden sind und die Glasränder der Scheiben von einem Kunststoffrahmen umschlossen sind, **dadurch gekennzeichnet, daß** die Folie (2) zwischen den Glasscheiben (3, 4; 3a, 4a; 3b, 4b) mit Stirnflächen (F1, F2; F3, F4; F5, F6) der Glasränder mindestens eine hohlraumfreie Konturfläche in der Ebene (X-X; Y-Y) bildet und an diese Fläche der Kunststoffrahmen (5) unmittelbar dicht anschließt.

2. Verbundglasscheibe nach Anspruch 1, **dadurch gekennzeichnet, daß** die Stirnflächen (F3, F4) der Glasscheiben (3a, 4a) randseitig abgerundet sind und die Folie (2) sich über die inneren Abrundungen der Stirnflächen (F3, F4) erstreckt, derart, daß sich eine durchgehende ebene Konturfläche in der Ebene (X-X) zwischen den Stirnfilächen (F3, F4) der Glasscheiben (3a, 4a) ergibt und der Kunststoffrahmen (5) unmittelbar und dicht an diese Konturfläche anschließt.

3. Verbundglasscheibe nach Anspruch 1, **dadurch gekennzeichnet, daß** die Stirnflächen (F5, F6) der beiden Glasscheiben (3b, 4b) abgestuft zueinander angeordnet sind und die Folie (2) zwischen den inneren Kanten der Stirnflächen (F5, F6) eine plane Fläche aufweist, die mit den anschließenden Stirnflächen (F5, F6) eine durchgehende hohlraumfreie Konturfläche bildet, an die sich der Kunststoffrahmen (5) unmittelbar und dicht anschließt.

4. Verfahren zur Durchführung eines Beschnitts einer Folie von einer Verbundglasscheibe, **dadurch gekennzeichnet, daß** die Folie (2) zwischen den Glasscheiben (3, 4; 3a, 4a; 3b, 4b) über randseitig umlaufende Stirnflächen (F1, F2; F3, F4; F5, F6) der Glasränder herausragt und bündig zu den Kanten und/oder Stirnflächen der Ränder der Glasscheiben (3, 4; 3a, 4a; 3b, 4b) abgeschnitten wird und nachfolgend das gebildete Glassegment (1) aus den Scheiben und der beschnittenen Folie (2) bestehend in einem Werkzeug (7) eingelegt wird und in das nachfolgend ein Kunststoffmaterial zur Bildung eines das Segment (1) vollständig umgebenden Kunststoffrahmens (5) eingebracht wird, und das Kunststoffmaterial die Stirnflächen (F1, F2; F3, F4; F5, F6) der Scheiben (3, 4; 3a, 4a; 3b, 4b) unmittelbar und dicht anliegend umschließt.
